# EUROPEAN PATENT APPLICATION

(11) **EP 1 804 456 A1**
(43) Date of publication of application: **04.07.2007**
(21) Application number: 05795803.5
(22) Date of filing: 18.10.2005
(51) Int. Cl.: H04L 29/06, H04Q 7/38

(54) **BEARER SELECTION METHOD AND DEVICE**

(30) Priority: 21.10.2004 JP 2004306334
(71) Applicant: NEC Corporation, Minato-ku Tokyo 108-8001 (JP)
(72) Inventor: OKUYAMA, Gen, NEC CORPORATION, Tokyo 108-8001 (JP)
(74) Representative: Glawe, Delfs, Moll
(86) International application number: PCT/JP2005/019129
(87) International publication number: WO 2006/043557

(57) **Abstract**

Bearer attribute information (20) indicating at least one bearer usable by an application and the priority of the bearer is compared with the characteristic information (21) of a communication terminal, thereby generating a bearer list (23) including, of bearers of the bearer attribute information, bearers usable by the communication terminal and the priorities of the bearers. The bearer list is stored in a database (DB). A bearer to be used by the application is selected in accordance with the priority in the bearer list, and the communication process of the application is executed. This allows to implement an application execution environment that sufficiently reflects the application provider's intention. The bearer list can be changed by the user via a user interface (24). In this case, the user can change the bearer list only within the range stored in the database. This prevents any arbitrary setting by the user.

## Description

### Technical Field

The present invention relates to a method and apparatus for selecting a bearer for a communication terminal and, more particularly, to a bearer selection method and apparatus for determining a bearer to be used by an application program in executing communication.

### Background Art

Conventionally, various proposals have been made for bearer selection in communication by a portable communication terminal. For example, reference 1 (Japanese Patent Laid-Open No. 2003-169359) describes a method of selecting a circuit switching bearer or a packet bearer for application download. In this method, the size of an application to be downloaded is compared with threshold information acquired from a network. If the application size is smaller than the threshold value, the application is downloaded by using a packet bearer. If the application size is larger, the application is downloaded by using a circuit switching bearer. It is possible to optimize the usage ratio of the circuit switching bearer and the packet bearer by adjusting the threshold information on the network side. A method of selectively using a bearer on the basis of a communication purpose has also been proposed. For example, a packet bearer is stationarily selected for access to a web.

In a bearer selection method disclosed in reference 2 (Japanese Patent Laid-Open No. 2001-237976), bearer information containing bearers for packets and short mail, the maximum number of transmission characters, and the mail transmission fees is stored. A bearer list usable by the terminal is generated by referring to the bearer information in association with generated mail, and the most inexpensive bearer is selected from the bearer list.

Reference 3 (Japanese Patent Laid-Open No. 2003-506981) describes a method of selecting a bearer required by an application in consideration of the specifications of a terminal. This prior art also describes a technique of inquiring of a user about a desired bearer and causing him/her to respond via a user interface.

### Disclosure of Invention

### Problems to be Solved by the Invention

However, the above-described conventional bearer selection methods cannot sufficiently reflect the intention of an application provider. They also allow the user to select a bearer at only limited discretion.

For example, in the bearer selection method of reference 1, the threshold value serving as the criterion of bearer selection is set on the network side, and a bearer to be used is selected independently of an application provider's intention.

The method of reference 2 automatically selects the most inexpensive bearer from the bearer list independently of an application provider's intention. Additionally, the user cannot actually be concerned in bearer selection unless manual bearer selection is set.

In the method of reference 3, the bearer requested by an application is selected in consideration of the specifications of the terminal. However, since the request of the application assumes a service quality such as a bit rate, the method cannot sufficiently reflect an application provider's intention. In addition, although the user can select a desired bearer by using a user interface, the selection range can neglect the capability of the terminal so no significant bearer selection is provided to the user.

It is an object of the present invention to allow an application provider to sufficiently set the bearer attribute of the application.

It is another object of the present invention to allow a user to select a bearer within a set bearer attribute range.

### Means of Solution to the Problems

According to the present invention, there is provided a bearer selection method characterized by comprising the steps of generating, on the basis of bearer attribute information indicating at least one bearer usable by an application to be executed in a communication terminal and a priority of the bearer, and characteristic information of the communication terminal, which is stored in the communication terminal in advance, a bearer list including, of bearers of the bearer attribute information, bearers usable by the communication terminal and priorities added to the bearers, storing the generated bearer list in a memory of the communication terminal, and selecting a bearer to be used by the application in accordance with the priority in the bearer list stored in the memory.

According to the present invention, there is also provided a bearer selection apparatus characterized by comprising a first storage unit which stores bearer attribute information indicating at least one bearer usable by an application to be executed in a communication terminal and a priority of the bearer, and characteristic information of the communication terminal, which is stored in the communication terminal in advance, an attribute verification unit which generates a bearer list including, of bearers of the bearer attribute information, bearers usable by the communication terminal and priorities added to the bearers by comparing the bearer attribute information with the characteristic information, which are stored in the first storage unit, a second storage unit which stores the generated bearer list, and a communication control unit which executes a communication process of the application by selecting a bearer to be used by the application in accordance with the priority in the bearer list stored in the second storage unit.

### Effect of the Invention

According to the present invention, it is possible to select an optimum bearer usable by the communication terminal on the basis of the types and priorities of bearers usable by an application. It is therefore possible to preferentially set, in the communication terminal, a bearer recommended for the application by the application provider and provide an application execution environment that sufficiently reflects the application provider's intention.

### Brief Description of Drawings

Fig. 1 is a block diagram showing the schematic arrangement of a communication terminal that employs a bearer selection method of the present invention;
Fig. 2 is a schematic view showing the outline of a procedure of the bearer selection method according to an embodiment of the present invention;
Fig. 3 is a block diagram of a bearer selection apparatus according to an embodiment of the present invention;
Fig. 4 is a block diagram showing a more detailed arrangement of a downloader in Fig. 3;
Fig. 5 is a block diagram showing a more detailed arrangement of a bearer setting device in Fig. 3;
Fig. 6 is a block diagram showing a more detailed arrangement of a communication control device in Fig. 3;
Fig. 7 is a flowchart showing a bearer setting process in download;
Fig. 8 is a block diagram showing a more detailed arrangement of a download unit in Fig. 4;
Fig. 9 is a flowchart showing a bearer setting process by a user;
Fig. 10 is a flowchart showing a bearer setting process in executing an application;
Fig. 11A is a view showing an example of a bearer attribute;
Fig. 11B is a view showing an example of terminal characteristic information;
Fig. 12 is a view showing an example of a matching process between the bearer attribute of an application program and terminal characteristic information;
Fig. 13A is a view showing an example of a user interface generated on the basis of the bearer list; and
Fig. 13B is a view showing an example of a changed bearer list.

### Best Mode for Carrying Out the Invention

### 1. Arrangement of Communication Terminal

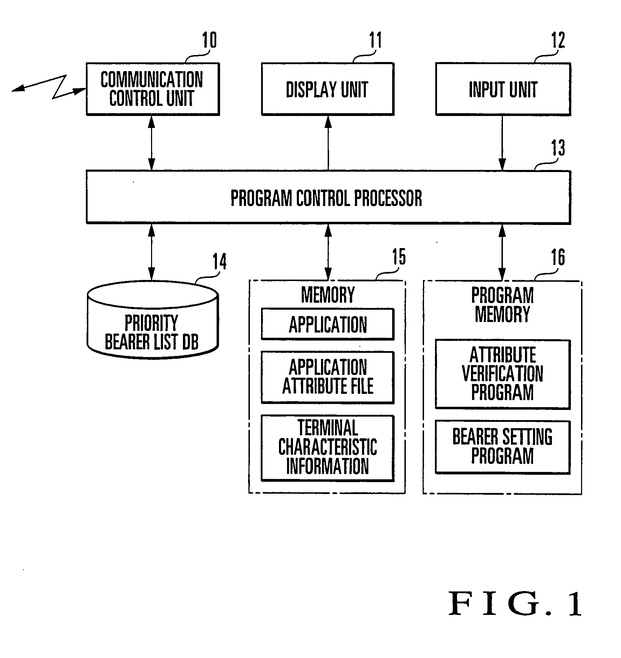

Fig. 1 is a block diagram showing the schematic arrangement of a communication terminal that employs a bearer selection method of the present invention. The communication terminal has a wired or wireless communication function. Examples are a mobile communication terminal such as a portable phone and a PDA, and a personal computer having a communication function.

The communication terminal has a communication control unit 10, display unit 11, and input unit 12. The display unit 11 and input unit 12 provide a user interface. The display unit 11 includes, e.g., a liquid crystal display. The input unit 12 includes, e.g., a key operation unit and a touch panel. The communication control unit 10 supports predetermined communication schemes such as short-distance wireless communication, optical communication, and wireless LAN. A user can download an application program from an application server via the communication control unit 10, as will be described later.

The communication terminal also has a program control processor 13, priority bearer list database (second storage unit) 14, memory (first storage unit) 15, and program memory 16. The program control processor 13 can be either a CPU to control the operation of the entire terminal or a microprocessor to practice the bearer selection method of the present invention.

The priority bearer list database 14 stores a priority bearer list corresponding to each application under the control of the program control processor 13. A priority bearer list is generated on the basis of priority bearer information provided by an application provider and the characteristic information of the terminal, as will be described later. The user can change the priority bearer list.

The memory 15 stores an application program downloaded under the control of the program control processor 13 and its application attribute file. The memory 15 also stores characteristic information such as resources usable by communication terminal.

The program memory 16 stores a program group including an attribute verification program and a bearer setting program to cause the program control processor 13 to practice the bearer selection method of the present invention. When the program control processor 13 executes the bearer setting program, a bearer selection apparatus (to be described later) can be implemented. The attribute verification program and bearer setting program are stored in various kinds of recording media such as an optical disk and a magnetic disk and provided via a data communication network such as the Internet.

### 2. Bearer Selection Operation

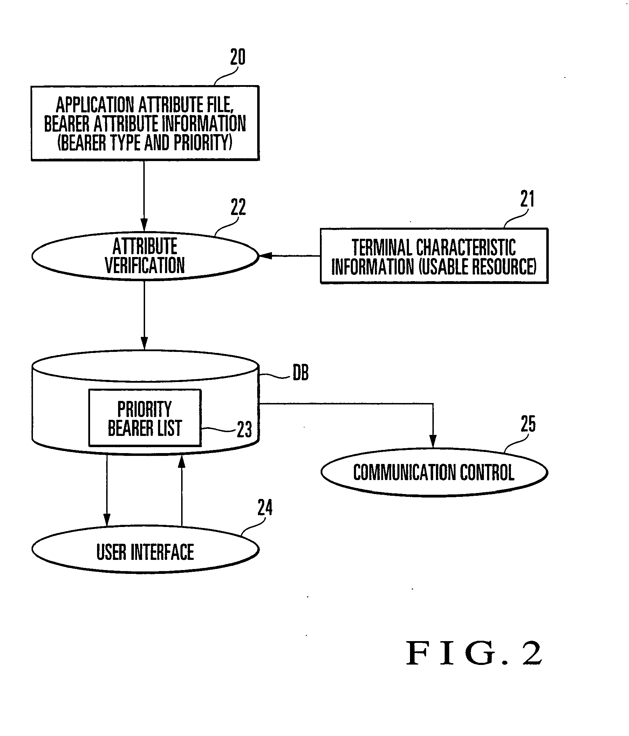

Fig. 2 is a schematic view showing the outline of a procedure of the bearer selection method according to an embodiment of the present invention. For example, an application attribute file 20 downloaded from a server contains at least one bearer type usable by the application, and bearer attribute information to designate the priority of each bearer. The priority is set by the application provider.

First, the bearer setting program stored in the program memory 16 is executed. The bearer setting program invokes the attribute verification program, thereby generating an attribute verification process 22. The attribute verification process 22 executes a matching process between the bearer attribute information in the application attribute file 20 with the terminal characteristic information stored in the memory 15, generates a bearer list 23 including common bearer types and their priorities, and stores it in the database 14.

Next, the bearer setting process generates a user interface 24 and displays the priority bearer list read out from the database 14 on the display unit 11. When the user changes the displayed bearer list by using the input unit 12, the changed bearer list is stored in the database 14. That is, the user can change a bearer that is determined once.

To perform communication, a communication control process 25 selects a bearer of the highest priority from the bearer list stored in the database 14 and controls the communication control unit 10 in accordance with the selected bearer.

### 3. Arrangement of Bearer Selection Apparatus

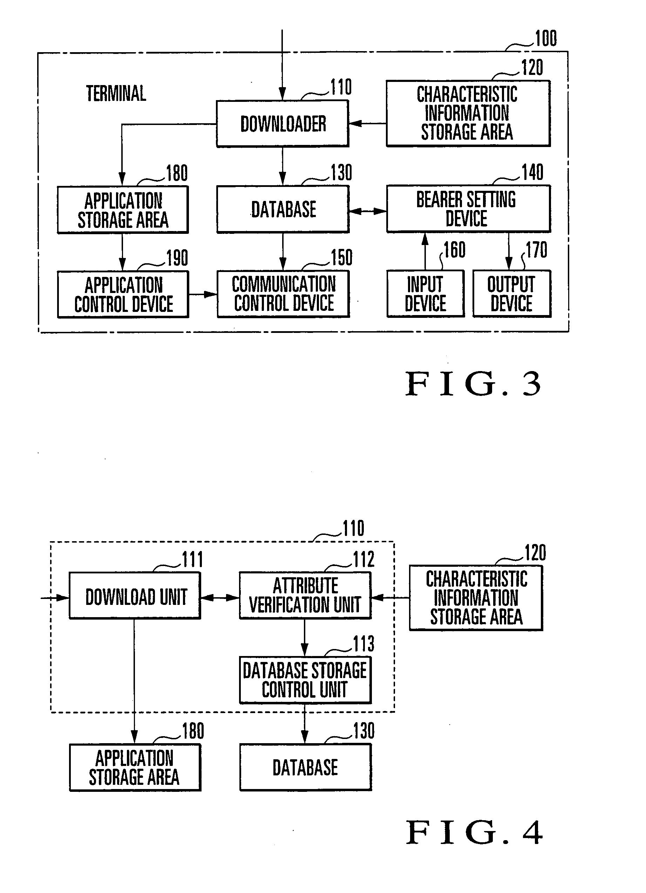

Fig. 3 is a block diagram of a bearer selection apparatus according to an embodiment of the present invention. The bearer selection apparatus is implemented in a terminal 100. The terminal 100 is assumed to be a device with a communication function such as a personal computer, PDA, or portable phone.

The terminal 100 includes a downloader 110 that downloads an application and an application attribute file, a characteristic information storage area 120 that stores the characteristic information of the terminal 100, a database (second storage unit) 130 that stores a bearer list, an application storage area 180 that stores an application, an application control device 190 that controls execution of an application, a bearer setting device 140 that sets a bearer, a communication control device 150 that executes communication control upon executing an application, an input device 160 such as a keyboard, and an output device (display unit) 170 such as a display.

The application control device 190 manages a life cycle such as execution and end of an application stored in the application storage area 180. When an application requests communication during execution, the application control device 190 requests communication of the communication control device 150.

The communication control device 150 selects one of a plurality of bearers (not shown) by designating it and executes communication. The communication control device 150 has a function of executing communication while switching the bearer to be used every time it is changed.

Fig. 4 is a block diagram showing a more detailed arrangement of the downloader of this embodiment. The downloader 110 includes a download unit 111 that downloads an application and an application attribute file, an attribute verification unit 112 that verifies the application attribute file, and a database storage control unit 113 that stores a bearer list in the database 130.

The attribute verification unit 112 extracts bearer attribute information from the application attribute file downloaded by the download unit 111 and executes a matching process of comparing the bearer attribute information with the characteristic information in the characteristic information storage area 120. A bearer usable by the terminal 100 (i.e., a bearer included in the resources of the characteristic information) is selected from bearers indicated by the bearer attribute information, and a bearer list including the bearer and priority given to it is generated. Hence, the bearer list includes bearers for which the bearers of the bearer attribute information match the resources of the characteristic information, and priorities corresponding to the bearers. The database storage control unit 113 stores, in the database 130, the bearer list acquired from the attribute verification unit 112.

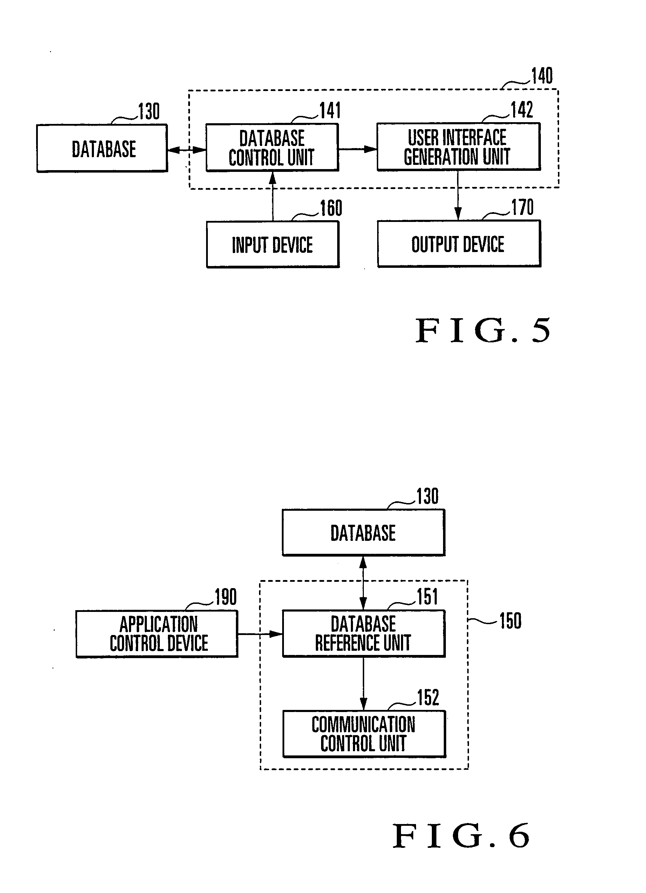

Fig. 5 is a block diagram showing a more detailed arrangement of the bearer setting device of this embodiment. The bearer setting device 140 includes a database control unit 141 that acquires and stores a bearer list, and a user interface generation unit 142 that generates a user interface UI. The database control unit 141 acquires a bearer list from the database 130 or changes the bearer list on the basis of information obtained from the input device 160 and stores the bearer list in the database 130. The user interface generation unit 142 generates a user interface to cause the user to set a bearer on the basis of the bearer list obtained from the database control unit 141.

Fig. 6 is a block diagram showing a more detailed arrangement of the communication control device of this embodiment. The communication control device 150 includes a database reference unit 151 that refers to the bearer list in the database 130, and a communication control unit 152 that controls communication. The communication control unit 152 executes communication by designating a bearer to be used in communication on the basis of bearer information received from the database reference unit 151.

### 4. Bearer Setting Process

### 4.1) Bearer Setting Process in Application Download

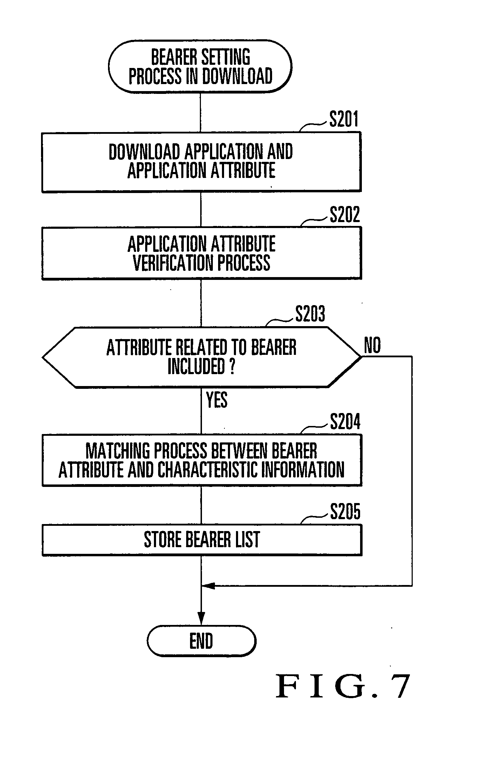

Fig. 7 is a flowchart showing a bearer setting process in download according to the embodiment. First, the downloader 110 downloads an application. The download unit 111 of the downloader 110 downloads an application and an application attribute file from a server (not shown) (step S201).

The downloaded application is stored in the application storage area 180. On the other hand, the attribute verification unit 112 verifies the application attribute file (step S202). The attribute verification unit 112 determines whether the application attribute file contains the attribute of a bearer (to be referred to as a bearer attribute hereinafter) to be used by the application program (step S203).

If the application attribute file contains no bearer attribute (NO in step S203), the bearer setting process in download is ended. If the application attribute file contains a bearer attribute (YES in step S203), the characteristic information of the terminal is read out from the characteristic information storage area 120 and subjected to the matching process (step S204). The characteristic information indicates resources usable by the terminal.

In matching process step S204, it is verified whether a bearer (bearer to be used by the application) designated to the bearer attribute is usable by the terminal. With this verification process, a new bearer list including the information of the bearer to be used by the application is generated. The database storage control unit 113 stores the generated bearer list in the database 130 (step S205).

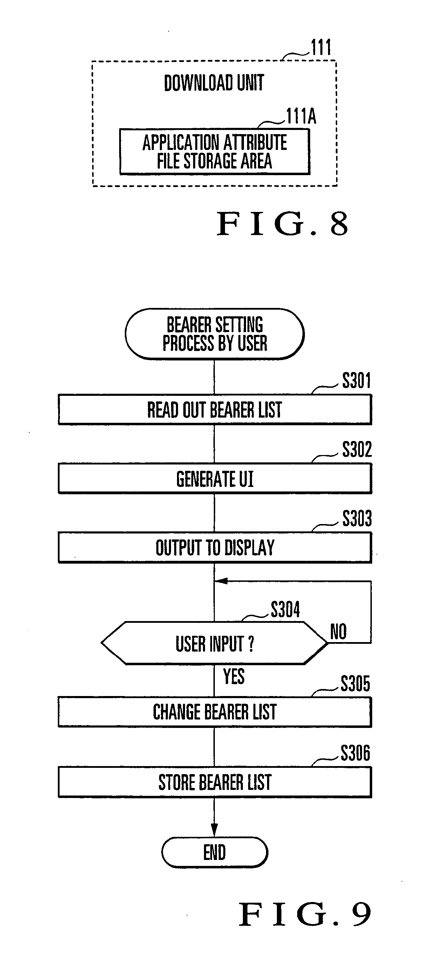

In step S201, the download unit 111 may temporarily store the downloaded application attribute file in an application attribute file storage area 111A shown in Fig. 8. In this case, the attribute verification unit 112 reads out the application attribute file from the application attribute file storage area 111A and executes the above-described process in steps S202 to S204. The characteristic information storage area 120, application storage area 180, and application attribute file storage area 111A are included in the storage area of the memory 15 in Fig. 1.

### 4.2) Bearer Setting Process by User

Fig. 9 is a flowchart showing a bearer setting process by the user in this embodiment. The bearer setting device 140 executes bearer setting by the user. The database control unit 141 reads out the bearer list of an application as a bearer setting target for the database 130 (step S301). The user interface generation unit 142 generates a user interface to be used for bearer selection by the user by displaying the bearer list on the basis of the information of the bearer list received from the database control unit 141 (step S302). The generated user interface is transferred to the output device 170. The output device 170 displays the contents of the bearer list on the display in accordance with the user interface received from the user interface generation unit 142 (step S303). It is determined whether the user inputs information to the user interface on the display by using the input device 160 (step S304).

If the user inputs information by using the input device 160 (YES in step S304), the database control unit 141 receives the input information from the user via the user interface and changes the bearer list acquired in step S301 on the basis of the information (step S305). For example, if the input information from the user is related to the priority of a bearer, the database control unit 141 changes the priority in the bearer list. The changed bearer list is stored in the database 130 (step S306).

### 4.3) Bearer Setting Process in Executing Application

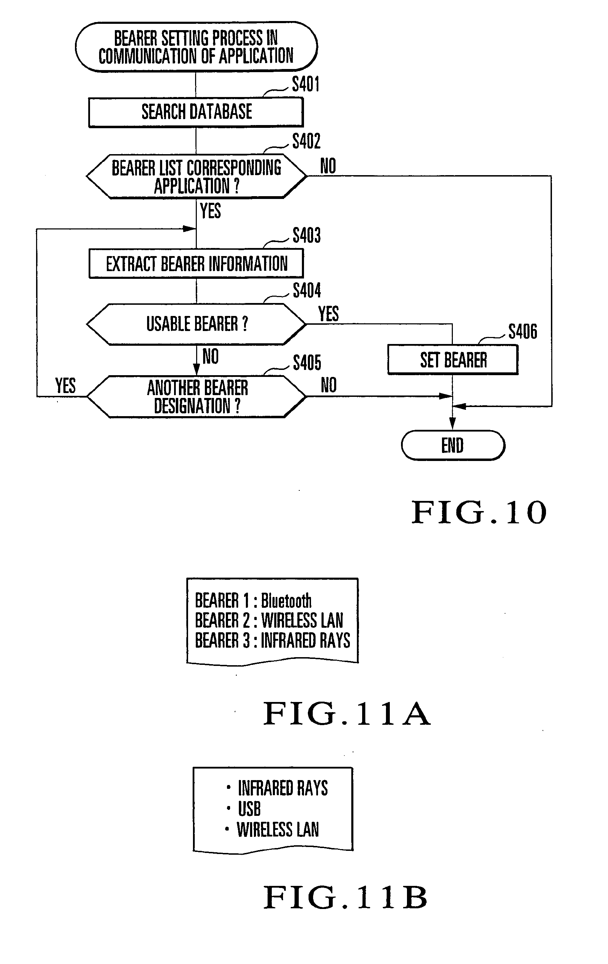

Fig. 10 is a flowchart showing a bearer setting process in executing an application of this embodiment. The communication control device 150 executes the bearer setting process in executing an application (in communication). The database reference unit 151 searches the database 130 for a bearer list corresponding to a running application on the basis of application information such as an application name received from the application control device 190 (steps S401 and S402). If no corresponding bearer list is found (NO in step S402), the database reference unit 151 notifies the communication control unit 152 of it, and the bearer setting process is ended. In this case, the communication control unit 152 executes communication by setting a bearer defined in the terminal in advance.

If a bearer list is found (YES in step S402), the database reference unit 151 extracts bearer information of the highest priority designated in the bearer list (step S403) and transfers it to the communication control unit 152. The communication control unit 152 verifies whether the bearer received from the database reference unit 151 is currently usable (step S404).

If the bearer is unusable (NO in step S404), the communication control unit 152 requests the database reference unit 151 to search for another bearer designation (step S405). If no bearer designation exists (NO in step S405), the database reference unit 151 notifies the communication control unit 152 of it, and the bearer setting process is ended. In this case, the communication control unit 152 sets a bearer defined in the terminal in advance.

If a bearer designation is found (YES in step S405), the database reference unit 151 transfers bearer information of the second highest priority to the communication control unit 152 (step S403). The communication control unit 152 verifies whether the bearer received from the database reference unit 151 is usable. Steps S403 to S405 are repeatedly executed until a usable bearer is found, or no more bearer designation is found. If a usable bearer is found (YES in step S404), the communication control unit 152 designates it as a bearer to be used in communication (step S406) and executes a communication process.

In this embodiment, it is possible to set a bearer corresponding to the terminal in consideration of the application provider's intention by generating a bearer list on the basis of the bearer attribute used by the application and the characteristic information in the terminal. It is also possible to select a bearer in consideration of convenience for the user by providing a user interface to select a bearer from a bearer list.

In this embodiment, the application attribute is downloaded together with the application as the download target. However, the present invention is not limited to this. That is, it is necessary to only acquire information about a bearer to be used by the application. The application attribute may be downloaded before download of the application. The application and application attribute file may be downloaded from different servers.

Bearer list acquisition from the database and bearer list storage in the database (step S205 in Fig. 7 and step S306 in Fig. 9) are not particularly specified in the present invention. For example, a bearer list may be acquired and stored by using an application name as a key.

In the above-described embodiment, if no bearer list is found in step S402 in Fig. 10, or if no bearer designation exists in step S405, a bearer defined in the terminal in advance is used. However, the present invention is not limited to this. The communication may be interrupted. Alternatively, a list of usable bearers is presented to the user to make him/her select one of them. To present a list of usable bearers and make the user select a bearer, a user interface may be generated on the basis of characteristic information stored in the characteristic information storage area 120 in Fig. 3.

A bearer selection method according to an embodiment of the present invention will be described on the basis of a detailed bearer list.

The bearer selection process starts from an application program download process. The application program (to be referred to as an application A hereinafter) to be downloaded includes an application attribute file. The application attribute file contains a bearer attribute.

Fig. 11A is a view showing an example of a bearer attribute. Fig. 11B is a view showing an example of terminal characteristic information. The bearer attribute indicates the types of bearers to be used by the application A and their priorities. In the example shown in Fig. 11A, three kinds of bearers are designated. A priority is designated by a numerical value n of a bearer n (n is an integer). The smaller the value n is, the higher the priority is. Hence, it can be seen that the application A first requests use of a short-distance wireless communication bearer such as Bluetooth in communication. The example shown in Fig. 11B indicates that the communication control unit supports (can use) "infrared ray", "USB", and "wireless LAN".

As described above, the download unit 111 downloads the application and application attribute file from a server (not shown). The downloaded application is stored in the application storage area 180. On the other hand, the attribute verification unit 112 verifies the application attribute file. The attribute verification unit 112 extracts the bearer attribute of the application A from the application attribute file and executes the matching process with the characteristic information of the terminal.

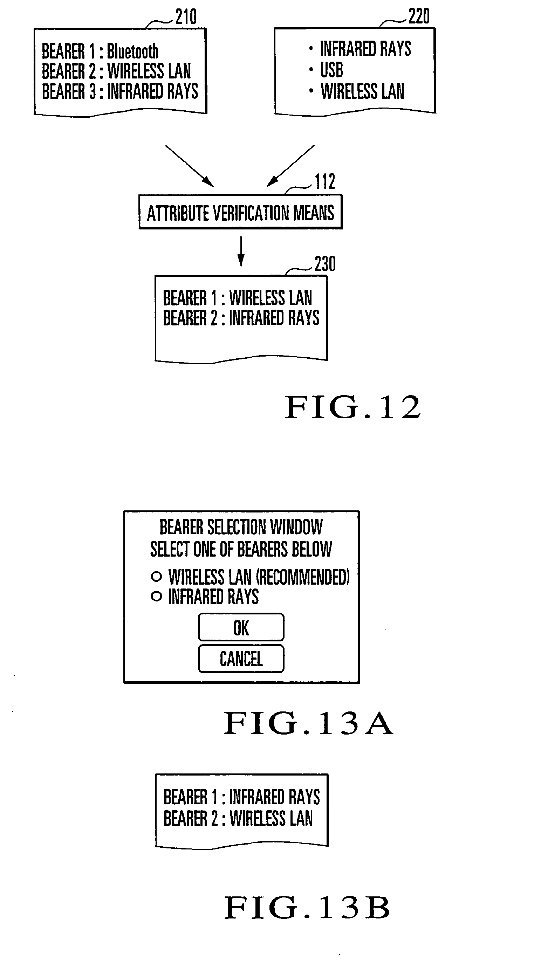

Fig. 12 is a view showing an example of the matching process between the bearer attribute of the application A and the characteristic information of the terminal. Fig. 13A is a view showing an example of a user interface generated on the basis of the bearer list. Fig. 13B is a view showing an example of the changed bearer list.

As shown in Fig. 12, the attribute verification unit 112 generates a bearer list 230 from a bearer attribute 210 and characteristic information 220. Of the bearer types contained in the bearer attribute, the resources (i.e., characteristic information) usable by the terminal are "infrared rays" and "wireless LAN". The application A gives a higher priority to "wireless LAN" than to "infrared rays". Hence, the attribute verification unit 112 generates the bearer list 230. The generated bearer list is stored in the database. The matching process between the attribute of the application and the characteristic information of the terminal enables bearer setting corresponding to the terminal in consideration of the application provider's intention.

The bearer setting process by the user is executed for the bearer list 230 generated by the attribute verification unit 112. In this embodiment, bearer setting by the user starts from designating an application as the bearer change target by using the input device 160.

When the application A is selected, the database control unit 141 acquires a corresponding bearer list from the database 130 by using information (application name) to specify the application as a key. On the basis of the acquired bearer list, a user interface for bearer change is generated.

"Wireless LAN" and "infrared rays" are set in the bearer list 230. "Wireless LAN" has a higher priority than "infrared rays". Hence, a user interface shown in Fig. 13A is generated. In this example, the bearer with the higher priority is displayed on the screen above the bearer with the lower priority. A text "recommended" may be added as needed. This makes the user more easily select the bearer with the high priority. The method of displaying the priority is not limited to this example. For example, a bearer with a high priority may be displayed in a different color. That is, any mechanism to allow the user to more easily select a bearer with a high priority is usable.

Assume that the user selects "infrared rays" after display of the user interface. In this case, the database control unit 141 changes the bearer list so that the changed bearer list in Fig. 13B is obtained. Since the user selects "infrared rays", a higher priority is given to "infrared rays" than to "wireless LAN". The database control unit 141 stores the changed bearer list in the database 130.

In this example, the bearer list before change is directly changed. The information before change may be left. The information may be stored in the database 130 as another file. Alternatively, both the information before change and that after change may be stored in a single file. Only the bearer ("infrared rays" in this example) changed by the user may be made usable.

The bearer selection process by the user has been described above. The user cannot set a bearer for his/her own convenience because the user interface to make the user set a bearer is generated on the basis of the bearer list generated at the time of download. The user can set a bearer only within the range of the bearer list. This method takes not only the application provider's intention but also convenience for the user into consideration.

A bearer selection process in executing an application will be described next. The application control device 190 executes an application. When the running application requests communication, the application control device 190 adds a key to specify the running application to a communication request and sends it to the communication control device 150. The specific key is, e.g., an application name or an application ID.

The database reference unit 151 in the communication control device 150 searches the database 130 for a bearer list corresponding to the application on the basis of the specific key received from the application control device 190.

If no bearer list is found, a bearer defined in the terminal in advance is used, the communication may be interrupted, or a user interface is displayed to make the user select a bearer. The process is not particularly limited.

If a bearer list exists, the database reference unit 151 selects the bearer of the highest priority and transfers the bearer information to the communication control unit 152. In the example shown in Fig. 13B, "infrared rays" is selected. In this case, the communication control unit 152 executes communication by using infrared rays.

If the infrared rays are unusable due to some reason, the communication control unit 152 requests the database reference unit 151 to search for another designated bearer. In Fig. 13B, "wireless LAN" is designated next to "infrared rays". The database reference unit 151 designates "wireless LAN" in the communication control unit 152. The communication control unit 152 executes communication via the wireless LAN. If the wireless LAN is also unusable, the database reference unit 151 notifies the user of it and interrupts the communication. Alternatively, a bearer defined in the terminal in advance may be selected.

As described above, according to the present invention, it is possible to select an optimum bearer usable by the communication terminal on the basis of the types and priorities of bearers usable by an application. It is therefore possible to preferentially set, in the communication terminal, a bearer recommended for the application by the application provider and provide an application execution environment that sufficiently reflects the application provider's intention.

The bearer list serving as the base of selection of a bearer to be used in communication can be changed so that the user can select a desired bearer list at his/her discretion. Especially when the user changes the priority in the bearer list, the bearer to be used for the communication process of the application can be determined flexibly. In this case, even when the bearer preferentially determined by the user is unusable, the communication terminal can execute the communication process by selecting the bearer of the second highest priority.

The user can change the bearer list only within the range of the displayed bearer list. This prevents arbitrary setting by the user.

### Industrial Applicability

The present invention is applicable to general communication devices of a system that executes communication in executing an application and selects a communication scheme (bearer) in communication.

## Claims

1. A bearer selection method **characterized by** comprising the steps of:
generating, on the basis of bearer attribute information indicating at least one bearer usable by an application to be executed in a communication terminal and a priority of the bearer, and characteristic information of the communication terminal, which is stored in the communication terminal in advance, a bearer list including, of bearers of the bearer attribute information, bearers usable by the communication terminal and priorities added to the bearers;
storing the generated bearer list in a memory of the communication terminal; and
selecting a bearer to be used by the application in accordance with the priority in the bearer list stored in the memory.

2. A bearer selection method according to claim 1, **characterized by** further comprising the step of displaying the bearer list stored in the memory.

3. A bearer selection method according to claim 2, **characterized by** further comprising the steps of:
changing the displayed bearer list on the basis of an input from an input device of the communication terminal; and
storing the changed bearer list in the memory.

4. A bearer selection method according to claim 1, **characterized in that**
the characteristic information of the communication terminal is information representing resources usable by the communication terminal, and
in the generating step, the bearer list is generated by selecting, of the bearers of the bearer attribute information, bearers included in the resources of the characteristic information as the bearers usable by the communication terminal.

5. A bearer selection method according to claim 4, **characterized by** further comprising the step of downloading the bearer attribute information from an application server,
wherein in the generating step, the bearer list is generated on the basis of the downloaded bearer attribute information.

6. A bearer selection method according to claim 2, **characterized in that** in the displaying step, the bearer list stored in the memory is displayed in accordance with a user interface.

7. A bearer selection method according to claim 6, **characterized by** further comprising the step of changing the bearer list stored in the memory interactively in accordance with the user interface.

8. A bearer selection method according to claim 1, **characterized by** further comprising the step of changing the priority in the bearer list stored in the memory.

9. A bearer selection method according to claim 1, **characterized in that** in the selecting step, the bearer is selected in descending order of priority in the bearer list stored in the memory.

10. A bearer selection method according to claim 1, **characterized by** further comprising the step of using a bearer preset in the communication terminal when the bearer list stored in the memory includes no bearer usable by the application.

11. A bearer selection apparatus **characterized by** comprising:
a first storage unit which stores bearer attribute information indicating at least one bearer usable by an application to be executed in a communication terminal and a priority of the bearer, and characteristic information of the communication terminal, which is stored in the communication terminal in advance;
an attribute verification unit which generates a bearer list including, of bearers of the bearer attribute information, bearers usable by the communication terminal and priorities added to the bearers by comparing the bearer attribute information with the characteristic information, which are stored in said first storage unit;
a second storage unit which stores the generated bearer list; and
a communication control unit which executes a communication process of the application by selecting a bearer to be used by the application in accordance with the priority in the bearer list stored in said second storage unit.

12. A bearer selection apparatus according to claim 11, **characterized by** further comprising a user interface generation unit which generates a user interface to display the bearer list stored in said second storage unit.

13. A bearer selection apparatus according to claim 11, **characterized in that**
the characteristic information of the communication terminal is information representing resources usable by the communication terminal, and
said attribute verification unit generates the bearer list by selecting, of the bearers of the bearer attribute information, bearers included in the resources of the characteristic information as the bearers usable by the communication terminal.

14. A bearer selection apparatus according to claim 11, **characterized by** further comprising a download unit which downloads the bearer attribute information from an application server and stores the bearer attribute information in said first storage unit.

15. A bearer selection apparatus according to claim 12, **characterized by** further comprising:
a display unit which displays contents of the bearer list stored in said second storage unit in accordance with the user interface generated by said user interface generation unit; and
a bearer list change unit which changes the contents of the bearer list stored in said second storage unit interactively in accordance with the user interface generated by said user interface generation unit.

16. A program which causes a computer functioning as a communication terminal to execute the steps of:
generating, on the basis of bearer attribute information indicating at least one bearer usable by an application to be executed in a communication terminal and a priority of the bearer, and characteristic information of the communication terminal, which is stored in the communication terminal in advance, a bearer list including, of bearers of the bearer attribute information, bearers usable by the communication terminal and priorities added to the bearers;
storing the generated bearer list in a memory of the communication terminal;
displaying the bearer list stored in the memory; and
selecting a bearer to be used by the application in accordance with the priority in the bearer list stored in the memory.

17. A computer system functioning as a communication terminal, **characterized by** comprising:
a memory;
a processor controlled by a program; and
a communication control unit which executes a communication process,
wherein the program causes said processor to execute the steps of:
storing, in said memory, bearer attribute information indicating at least one bearer usable by an application to be executed in the communication terminal and a priority of the bearer, and characteristic information of the communication terminal, which is stored in the communication terminal in advance;
generating a bearer list including, of bearers of the bearer attribute information, bearers usable by the communication terminal and priorities added to the bearers by comparing the bearer attribute information with the characteristic information, which are stored;
storing the generated bearer list in said memory;
generating a user interface to display the bearer list stored in said memory;
selecting a bearer to be used by the application in accordance with the priority in the bearer list stored in said memory; and
causing said communication control unit to execute the communication process of the application by using the selected bearer.

18. A communication terminal having a communication function and an application execution function, **characterized by** comprising:
a first storage unit which stores bearer attribute information indicating at least one bearer usable by an application and a priority of the bearer, and characteristic information of the communication terminal, which is stored in advance;
an attribute verification unit which generates a bearer list including, of bearers of the bearer attribute information, bearers usable by the communication terminal and priorities added to the bearers by comparing the bearer attribute information with the characteristic information, which are stored in said first storage unit;
a second storage unit which stores the generated bearer list;
a user interface generation unit which generates a user interface to display the bearer list stored in said second storage unit; and
a communication control unit which executes a communication process of the application by selecting a bearer to be used by the application in accordance with the priority in the bearer list stored in said second storage unit.
